# EUROPEAN PATENT APPLICATION

(11) **EP 1 939 893 A2**
(43) Date of publication of application: **02.07.2008**
(21) Application number: 07254952.0
(22) Date of filing: 19.12.2007
(51) Int. Cl.: G21K 4/00, C09K 11/77

(54) **Radiation image conversion panel**

(30) Priority: 27.12.2006 JP 2006351550
(71) Applicant: Konica Minolta Medical & Graphic, Inc., Hino-shi, Tokyo 191-8511 (JP)
(72) Inventor: Hirai, Yoko, Tokyo, 191-8511 (JP)
(74) Representative: Alton, Andrew

(57) **Abstract**

A radiation image conversion panel containing: (a) a quadrilateral phosphor plate containing a substrate having thereon a phosphor layer; and (b) a barrier film which envelops the phosphor plate by being folded back so that the barrier film faces itself and forms an envelop which is folded on one side and sealed on the other three sides, wherein the barrier film contains two cover sheets and a cushion layer sandwiched between the cover sheets.

## Description

This application is based on Japanese Patent Application No. 2006-351550 filed on December 27, 2006 with Japan Patent Office, the entire content of which is hereby incorporated by reference.

### TECHNICAL FIELD

The present invention relates to a radiation image conversion panel and in more detail to a radiation image conversion panel for mammography.

### BACKGROUND

In order to record images of chest wall portions, radiation image conversion panels are required to assuredly extend the effective image region to the edges of the plate. Incidentally, phosphors employed in these panels exhibit low moisture resistance. Further, these panels are required to be abrasion resistant. Consequently, a protective layer exhibiting a moisture resistant function is commonly provided. Disclosed as a method to assuredly extend the effective image region to the edges and to result in moisture resistance is one which satisfies both the image of the chest wall portion and durability in such a manner that a barrier film composed of a moisture resistant film having thereon a sealant layer is folded back on itself and the three edges are sealed (refer, for example, Patent Documents 1 and 2).

On the other hand, in recent years, developed have been radiation conversion panels employing a phosphor layer prepared by a gas phase deposition method which enables to realize higher image quality and their practical application to mammography have been investigated. In order to enhance moisture resistant function, it is effective that a plurality of films, having a moisture resistant layer, is adhered to each other. However, when the above method is applied to a sealed film, high pressure is required to produce a fold line for folding-back on itself resulting in degradation of moisture resistance at the folded line portion, whereby a problem has resulted in which the desired moisture resistant function is not realized.

As a means to overcome the above drawback, by providing a cushion layer as a method described in the present invention, it is possible to realize sufficient durability while employing the gas phase deposition.
(Patent Document 1) Japanese Patent Publication Open to Public Inspection (hereinafter referred to as JP-A) No. 2001-83299
(Patent Document 2) JP-A No. 2002-131498

### SUMMARY

An object of the present invention is to provide a radiation conversion panel employing a phosphor layer prepared by a gas phase deposition method, which results in high image quality and exhibits a high moisture resistant function.

It is possible to achieve the object of the present invention by employing the following embodiments.
1. An aspect of the present invention includes a radiation image conversion panel comprising:
   (a) a quadrilateral phosphor plate comprising a substrate having thereon a phosphor layer; and
   (b) a barrier film which envelops the phosphor plate by being folded back so that the barrier film faces itself and forms an envelop which is folded on one side and sealed on the other three sides,
      wherein the barrier film comprises two cover sheets and a cushion layer sandwiched between the cover sheets.
2. Another aspect of the present invention includes a radiation image conversion panel of the above-described item 1,
   wherein each of the two cover sheets of the barrier film is provided with a moisture barrier layer comprising a transparent metal oxide compound, and the barrier film exhibits a moisture permeability of equal to or less than 0.02 g/m²·day·atm measured at 40 °C and 90%RH using a method based on JIS K 7129-1992.
3. Another aspect of the present invention includes a radiation image conversion panel of the above-described items 1 or 2,
   wherein the cushion layer has a thickness of 3 to 30 µm and has a transmittance of 90 % or more for a light of 500 nm.
4. Another aspect of the present invention includes a radiation image conversion panel of any one of the above-described items 1 to 3,
wherein the phosphor layer is formed with a vapor deposition method.

According to the present invention, it was possible to provide a radiation image conversion panel employing a phosphor layer prepared by a gas phase deposition method, which results in high image quality and exhibits a high moisture resistant function.

### BRIEF DESCRIPTION OF THE DRAWINGS

Fig. 1 is a sectional view of a radiation image conversion panel enveloped in a barrier film.
Fig. 2 is a perspective view of a radiation image conversion panel enveloped in a barrier film.

### DESCRIPTION OF THE PREFERRED EMBODIMENTS

The present invention will now be detailed.

### (Stimulable Phosphors)

Examples of the stimulable phosphors employed in the radiation conversion panel of the present invention include the phosphors represented by BaSO₄:Aₓ described in JP-A No. 48-80487, the phosphors represented by MgSO₄:Aₓ described in JP-A No. 48-80488, the phosphors represented by SrSO₄:Aₓ described in JP-A No. 48-80489, the phosphors described in JP-A No. 51-29889 in which at least one of Mn, DY, and Tb is added to Na₂SO₄, CaSO₄, and BaSO₄, the phosphors such as BeO, LiF, MgSO₄, and CaF₂ described in JP-A No. 52-30487, the phosphors such as Li₂B₄O₇:Cu, Ag described in JP-A No. 53-39277, the phosphors such as Li₂O·(Be₂O₂)ₓ:Cu, Ag described in JP-A No. 54-47883, and the phosphors represented by SrS:Ce, Sm, SrS:Eu,Sm,,La₂O₂S : Eu,Sm and (Zn, Cd) S:Mnₓ described in U.S. Pat. No. 3,859,527.

Further included are the alkaline earth fluoride halide phosphors represented by formula (Ba_{1-x-y}MgₓCa_{y})Fx:Eu²⁺ described in JA-A No. 55-12143; the phosphors represented by formula LnOX:x.A described in JP-A No. 55-12144; the phosphors represented by formula (Ba₁₋ₓM(II)ₓ)Fₓ:yA described in JP-A No. 55-12145; the phosphors represented by formula BaFX:xCe,yA described in JP-A No. 55-84389; and the rare earth element-activated bivalent metal fluorohalide phosphors represented by formula M(II)FX·xA:yLn, and the phosphors represented by formula ZnS:A,CdS:A,(Zn,Cd)S:A,X described in JP-A No. 55-160078; as well as the phosphors represented by any of following formulas described in JP-A No. 59-38278
xM₃(PO₄)₂·NX₂:yA and
xM₃(PO₄)₂: yA;
the phosphors represented by any of following formulas described in JP-A No. 59-155487
nReX₃·mAX'₂:xEu and nReX₃·mAX'₂:xEu,ySm;
the alkali halide phosphors represented by following formula described in JP- No. 61-72087M(I)X·aM(II)X'₂·bM(III)X"₃:cA; and the bismuth-activated alkali halide phosphors represented by formula M(I)X:xBi described in JP-A No. 61-228400.

Specifically preferred are alkali halide phosphors since they enable easy formation of a columnar stimulable phosphor layer employing methods such as vapor deposition or sputtering.

Further, as noted above, of the alkali halide phosphors, in view of high luminance and high image quality, specifically preferred are RbBr and Br based phosphors.

However, stimulable phosphors employed in the radiation conversion panel of the present invention are not limited to those described above, and may include any of the phosphors as long as they exhibit stimulated luminescence when stimulation exciting light is exposed following exposure to radiation.

### (Barrier film)

The barrier film of the present invention may be provided with moisture and gas preventing properties employing technologies known in the art. It is essential that the barrier film be composed of a barrier film capable of minimizing moisture permeation. It is possible to provide a film also exhibiting functions such as absorption of exciting light, matting, and sealant, employing combinations of methods such as film adhesion, coating onto a film, vapor deposition, transfer, or sublimation, whereby the barrier film may be converted to a composite film. It is preferable that water vapor permeability determined by the method based on JIS K 7129-1992 is preferably at most 0.02 g/m²·day·atm at 40 °C and 90% relative humidity, but is more preferably 0.01 g/m²·day·atm at 40 °C (wherein atm represents 1.01325 x 10⁵ Pa).

### (Barrier Film Employed)

The barrier film employed for the barrier film in the present invention refers to a film-like material exhibiting a function to minimize moisture permeation. It is possible to employ, other than a film itself exhibiting moisture resistant property, films which are subjected to a treatment such as coating, vapor deposition or adhesion of materials exhibiting moisture resistant function. Such films include polyethylene terephthalate, polyethylene naphthalate, polyamide, polyimide, aramid resin, cycloolefin based and norbornene based plastic films, as well as alkylene-vinyl copolymer resin, nylon, and various fluorine-containing resin films.

The barrier film incorporates any of the above film having thereon a moisture resistant layer which is formed employing a method such as coating, vapor deposition, lamination, transfer, or sublimation, whereby it is possible to enhance its barrier function.

In order to assure stable barrier performance and to minimize secondary environmental pollution, preferred are metals such as Al, Si, Ti, Zn, Zr, Mg, Sn, Cu, or Fe and oxides thereof, more specifically SiOₓ (X = 1.0 - 2.0), alumina, magnesia, zinc sulfide, titania, zirconia, cerium oxide, silicon nitride, aluminum nitride, tin oxide, and silicon or oxide nitride.

The thickness of the above inorganic vapor deposition layer is preferably in the range of 10 - 50,000 Å, and is more preferably in the range of 50 - 20,000 Å. When the thickness is less than 10 Å, it is difficult to realize sufficient gas preventing capability. On the other hand, even though the thickness is excessively increased over 50,000 Å, effects to enhance gas preventing capability is not realized, rather resulting in disadvantages in terms of flex durability and production cost.

The above inorganic material deposition layer is formed employing an appropriate method which is selected from physical deposition methods such as a vacuum deposition method, a sputtering method, an ion plating method or chemical deposition methods. Further, coating methods employing a sol-gel method is also preferably employed. In the case of the coating method, it is possible to employ a mixture of various binders such as polyvinyl alcohol resins, acryl based resins, or epoxy resins with the above inorganic materials for barrier. When a vacuum deposition method is employed, employed as preferred deposition materials are metals such as aluminum, silicon, titanium, magnesium, zirconium, cerium, or zinc, as well as compounds such as SiOₓ (x = 1.0 - 2.0), alumina, magnesia, zinc sulfide, titania, or zirconia, or mixtures thereof. Employed as a heating method may be resistance heating, induction heating, and electron beam heating. Further introduced as a reaction gas may be oxygen, nitrogen, hydrogen, argon, carbon dioxide gas, or water vapor. Alternatively employed may be reactive deposition simultaneously employing means such as ozone addition or ion assist. Still further, varied may be film forming conditions such as application of bias to the substrate or heating and cooling of the substrate. When the sputtering method or the CVD method is employed, the above film forming conditions such as deposition materials, reaction gases, substrate bias, heating and cooling may be varied in the same manner as above. When a moisture resistant layer is formed, if desired, it is effective to achieve the arrangement of an anchor coat, or prior to or during deposition, a corona treatment, a flame treatment, a low temperature plasma treatment, a glow discharge treatment, a reverse sputtering treatment, or a surface roughening treatment so that adhesion to the inorganic material deposition layer is further enhanced.

The moisture resistant layer formed on the barrier film in the present invention may be employed in the form of a single layer or a double layer. When employed in the form of the double layer, a layer which incorporates the same materials or is formed via the same film forming method may be laminated, or a layer which incorporates different materials or is formed via a different film forming method may also be laminated. Specifically, when the vapor deposition method and the coating method are combined, it is possible to minimize micro-cracks formed via the vapor deposition employing the coating method, whereby synergistic effects may be expected. It is possible to apply, to these barrier films exhibiting a moisture resistant function, various technologies disclosed, for example, in JP-A Nos. 2002-321301, 8-318591, 8-267637, 7-117198, 7-173348, and 6-47876.

The barrier film of the present invention may be structured via combination of at least two of the barrier films described above. In such a case, methods may be employed in which barrier films are adhered to each other as described in JP-A No. 2006-51751 and Pamphlet WO2004/101276 in which an exciting light absorbing film is provided between two barrier films. In the present invention, when two barrier films (or called as cover sheets) are adhered, it is possible to realize desired image performance and storage performance by providing a cushion layer in the protective film.

### (Cushion Layer)

The cushion layer is one which exhibits cushioning capability. It is possible to employ elastic modulus and the degree of needle penetration as an index to represent the cushioning capability as described herein. For example, preferably employed is a layer of an elastic modulus of about 9.8 x 10⁶ - 24.5 x 10⁸a at 25 °C, or of a needle penetration specified in JIS K 2530-1976 of preferably 15 - 500 but more preferably 30 - 300.

Though it is not always possible to specify preferred characteristics of the cushion layer only with materials, materials which exhibit preferred characteristics include polyolefin resins, ethylene-vinyl acetate copolymers, ethylene-ethyl acrylate copolymers, polybutadiene resins, styrene-butadiene copolymer (SBR), styrene-ethylene-butene-styrene copolymers (SEBS), acrylonitrile-butadiene copolymers (NBR), polyisoprene resins (IR), styrene-isoprene copolymers (SIS), acrylic acid ester copolymers, polyester resins, polyurethane resins, acryl resins, butyl rubber, and polynorbornene. Various commercial adhesives may be also converted as a cushion layer.

Applicable methods to form the cushion layer include a coating method in which the above materials are dissolved in solvents or dispersed in the form of latex and the resulting composition is coated via a blade coater, a roller coater, or a gravure coater, as well as a lamination method employing extrusion via hot-melt. Further, employed as a particular cushion layer may be a void-structured resin layer prepared by expanding thermally softening or thermoplastic resins. The thickness of the cushion layer is preferably 1 - 30 µm, but is more preferably 3 - 10 µm.

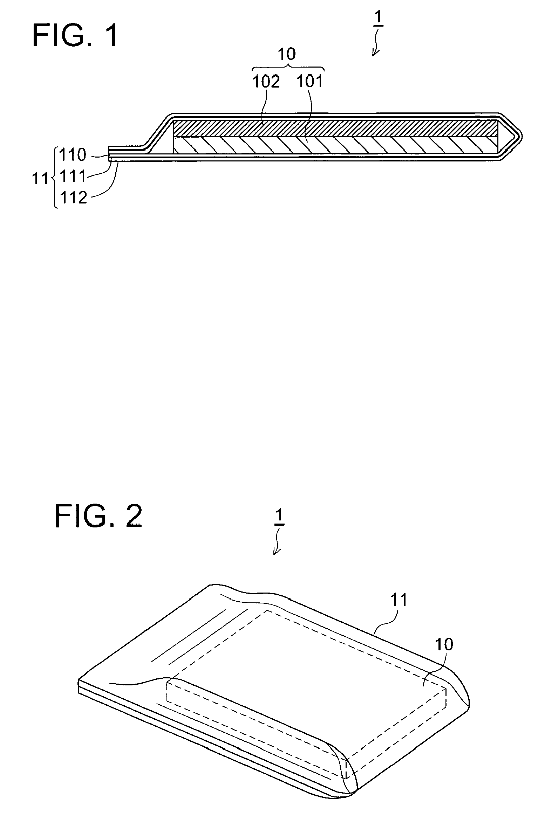

Fig. 1 shows a sectional view of an example of a radiation image conversion panel. Radiation image conversion panel 1 contains phosphor plate 10 enveloped in barrier film 11. Phosphor plate 10 contains substrate 101 having thereon phosphor layer 102. Barrier film 11 has a multilayered structure containing two cover sheets 110 and 112 and cushion layer 111 which is sandwiched between cover sheets 110 and 112.

Fig. 2 shows a perspective view of an example of a radiation image conversion panel. Barrier film 11 envelops phosphor plate 10 to form an envelop which is folded on one side and other three sides are sealed to make radiation image conversion panel 1.

### EXAMPLES

### Example 1

### (Preparation of Gas Phase Deposition Type Stimulable Phosphor Layer)

A stimulable phosphor layer was formed which incorporated a support (being a substrate) having thereon a stimulable phosphor (CsBr:Eu), employing a gas phase deposition (vapor deposition) apparatus.

The above vapor deposition was carried out as follows. A polyimide film, which had been subjected to aluminum sputtering, was employed as a support. The above support was placed in the above gas phase deposition apparatus. Subsequently, a raw phosphor material (CsBr:Eu) was subjected to press molding and employed as a vapor deposition source while placed in a water-cooled crucible.

Subsequently, the above gas phase deposition apparatus was evacuated through the exhaust outlet which was connected to a pump, and further, nitrogen gas was introduced through the gas inlet (at a flow rate of 1,000 sccm (sccm: standard, ml/min(1 x 10-6m³/min)). After maintaining 6.65 x 10⁻³ Pa of vacuum in the apparatus at, the vapor deposition source was heated to 650 °C and vapor deposition was carried out as follows. An alkali halide phosphor, composed of CsBr:0.0001 Eu, was deposited onto one surface of the glass support (the substrate) from the normal direction to the support surface (namely matching the slit and the deposition source in the normal direction (θ2 = nearly 0 degree)), while conveying the support in the direction parallel to the support. Distance (d) between the support and vaporization source was maintained at 60 cm. When the thickness of the photostimulable phosphor layer reached 400 µm, the vapor deposition was terminated, whereby a stimulable phosphor sample (a phosphor plate) was prepared.

### <Preparation of Barrier film 1>

As a barrier film of a phosphor plate, one, which was structured as shown by (A) below, was prepared and designated as Barrier film 1.

### Structure (A)

Polyethylene terephthalate (PET) film 12/barrier PET 12, cushion layer 10, barrier PET 12/sealant film 40 (the numeral after each of the resin films is its thickness (µm)).

Above "/" means that in a dry lamination adhesion layer, the thickness of an adhesive agent layer is 2.5 µm. The employed adhesive agent for dry lamination was a dual liquid reactive type urethane based adhesive agent.

Each of the components will now be detailed.

PET film 12: The undersurface of biaxially oriented PET film 12 was subjected to solid printing employing a cyan ink to result in a transmittance of 75% at 690 nm.

Barrier PET 12, cushion layer 10, barrier PET 12: As a substrate, biaxially oriented 12 µm thick PET film was prepared and was placed in a vacuum deposition apparatus, employing an electron beam heating system. Subsequently deposited on one side of the PET film was a 15 nm thick aluminum oxide layer, whereby a first vapor deposition layer was prepared.

Subsequently, the following coating materials were prepared.

| (Liquid 1) | |
|---|---|
| Tetraethoxysilane | 10.4 g |
| Hydrochloric acid (0.1 mol/liter) | 89.6 g |

| (Liquid 2) | |
|---|---|
| Polyvinyl alcohol | 3.0 g |
| Water | 87.3 g |
| Isopropyl alcohol | 9.7 g |

A liquid coating composition was prepared by mixing above Liquids 1 and 2 at a ratio of 6 : 4. The resulting liquid coating composition was coated employing a gravure method and subsequently dried at 120 °C over one minute, whereby a 0.5 µm thick first vapor deposition layer and a first gas barrier coated layer were formed.

Thereafter, the substrate, on which the first vapor deposition layer and the first gas barrier coated layer were formed, was placed in a vacuum deposition apparatus employing an electron beam heating system, and 15 nm thick aluminum oxide was deposited, whereby a second vapor deposition layer was prepared. Further, a second gas barrier coated layer was prepared on the second vapor deposition layer in the same manner as the first gas barrier coated layer.

Two sheets of the barrier film prepared as above were prepared. BXX5134 (produced by Toyo Ink Production Co., Ltd.) was added to acryl based adhesive material BPS5215 (also produced by Toyo Ink Production Co., Ltd.), and the resulting mixture was applied onto the second gas barrier coated layer of one film to result in a dried thickness of 10 µm. The resulting coating was dried via hot-air flow, whereby a cushion layer was prepared. The surface of the second gas barrier coated layer of another barrier film was overlapped on the resulting cushion layer followed by contact under pressure so that the two barrier films were adhered, whereby it was possible to prepare the targeted cushion layer.

Sealant Film: CPP (casting polypropylene) was employed as a sealant film.

### «Sealing of Phosphor Plate»

A sealing envelop was prepared in such a manner that Barrier film 1 was folded on itself and three edges were thermally sealed. Subsequently a phosphor plate was placed in the resulting bag and the periphery was subjected to fusion adhesion under vacuum, employing an impulse sealer, whereby Radiations Image Conversion Panel 1 was prepared. When folded on itself, 100 g/cm² of pressure was applied to the folded portion at 60 °C for 1.3 seconds, whereby a folding line was formed.

### Example 2

Radiation Conversion Panel 2 was prepared in the same manner as Example 1, except that Barrier film 2 was prepared in such a manner that the cushion layer employed in Barrier film 1 was replaced with rubber based adhesive agent BPS3757-1 and the coating thickness was regulated to 25 microns.

### Example 3

Radiation Conversion Panel 3 was prepared in the same manner as Example 1, except that Barrier film 1 was replaced with Barrier film 3 structured as follows.

Polyethylene terephthalate (PET) film 6/barrier PET 6, cushion layer 10, barrier PET 6/barrier PET 6, cushion layer, sealant film 40

Above "/" means that in a dry lamination adhesion layer, the thickness of the adhesive agent layer is 2.5 µm. The employed adhesive agent for dry lamination was a dual liquid reactive type urethane based adhesive agent. Preparation of "barrier PET 6,cushion layer 10, barrier PET 6" part:

A 6 µm thick biaxially oriented PET film was prepared as a substrate and placed in a vacuum deposition apparatus via an electron beam heating system. Subsequently, a 15 nm thick aluminum oxide layer was deposited on the surface of one side of the PET film, whereby a first deposition layer was prepared.

Subsequently prepared was the following coating composition.

A liquid coating composition was prepared by blending Liquids 1 and 2 employed in Example 1 at a ratio of 6 : 4. The resulting liquid coating composition was coated via a gravure method and the resulting coating was dried at 123 °C over one minute, whereby a 0.5 µm thick first deposition layer and a first gas preventing coated layer were formed.

Thereafter, the substrate on which the first deposition layer and the first gas barrier coated layer was set in a vacuum deposition apparatus via an electron beam heating system, whereby 15 nm of aluminum was deposited and a second deposition layer was prepared. Further, the second gas barrier coated layer was prepared on the second deposition layer in the same manner as the first gas barrier coated layer.

Two sheets of the barrier film prepared as above were prepared. BXX5134 (produced by Toyo Ink Mfg. Co., Ltd.) was added to acryl based adhesive material BPS5215 (also produced by Toyo Ink Mfg. Co., Ltd.), and the resulting mixture was applied onto the surface of the second gas barrier coated layer of one film to result in a dried thickness of 10 µm. The resulting coating was dried via hot-air flow, whereby a cushion layer was prepared. The surface of the second gas barrier coated layer of another barrier film was overlapped on the resulting cushion layer followed by contact under pressure so that two barrier films were adhered, whereby it was possible to prepare a cushion layer.

### Preparation of "barrier PET 6, cushion layer, sealant film 40" part

Barrier PET 6 was prepared employing the same method as for above barrier PET 6. BXX5134 (produced by Toyo Ink Mfg. Co., Ltd.) was added to acryl based adhesive material BPS5215 (also produced by Toyo Ink Mfg. Co., Ltd.), and the resulting mixture was applied onto the surface of the second gas preventing coated layer of barrier PET to result in a dried thickness of 10 µm. The resulting coating was dried via hot air flow, whereby a cushion layer was prepared. Overlapped on the resulting cushion layer was 40 µm CPP as a sealant film followed by pressure adhesion so that two film sheets were adhered, whereby it was possible to prepare the cushion layer.

Transmittance at 500 nm of the cushion layer of above Barrier films 1 - 3 was determined as follows.

Transmittance Determination Films 1 - 3 were prepared in the same manner as Barrier films 1 - 3, except that no PET was provided in the uppermost layer. As a reference, Reference Determination Films 1 - 3 were prepared in the same manner as Transmittance Determination Films 1 - 3, except that the film was adhered via dry lamination instead of the cushion layer.

Transmittance at 500 nm of the transmittance determination films and reference determination films was determined employing spectrophotometer F-7000, produced by Hitachi Ltd. The difference of the absorbance between the transmittance determination film and the reference determination film was obtained and the resulting value was converted to transmittance, whereby absorbance was obtained.

### Comparative Example 1

Radiation Image Conversion Panel 4 was prepared in the same manner as Example 1, except that Barrier film 4 structured as below was employed.

Polyethylene terephthalate (PET) film 12/barrier PET 12/barrier PET 12/sealant film 40 (the numeral after each of the resin film represents film thickness (µm))

Above "/" means that in a dry lamination adhesion layer, the thickness of the adhesive agent layer is 2.5 µm. The employed adhesive agent for dry lamination was a dual liquid reactive type urethane based adhesive agent.

### Comparative Example 2

Radiation Image Conversion Panel 5 was prepared in the same manner as Comparative Example 1, except that Barrier film 4 used in Comparative Example 1 was employed as a barrier film and sealing conditions were set as follows. Subsequently, Comparative Example 2 was evaluated.

### «Sealing of Phosphor plate»

A sealing bag was prepared in such a manner that Barrier film 1 was folded on self and three edges were thermally sealed. Subsequently a phosphor plate was placed in the resulting bag and the periphery was subjected to fusion adhesion under vacuum, employing an impulse sealer, whereby Radiations Image Conversion Panel 1 was prepared. When folded on itself, 400 g/cm² pressure of was applied to the folded portion at 60 °C for 1.3 seconds, whereby a folded line was formed.

### Evaluation Methods

### Chest Wall Portion Image

The distance from the edge of the folded portion to the effective image region was determined and the following evaluation was made. Table 1 shows the results.
A: less than 100 µm
B: 100 - 700 µm
C: at least 700 µm

### Water Vapor Permeability

The water vapor permeability of each of the resulting films was determined via JIS K 7129; B method (at 40 °C and 90%RH) method. Table 1 shows these results.

### Evaluation of Moisture Resistance

Each of the resulting radiation image conversion panels was exposed to X-rays at a tube voltage of 80 kVp through a lead chart. Thereafter, the above radiation image conversion panel was excited via the operation of He-Ne laser beams (633 nm) and stimulated luminescence emitted from the phosphor layer was received by a light receiving device (being a photomultiplier tube exhibiting a spectral sensitivity of S-5) and then converted to electrical signals, followed by analog/digital conversion which was recorded on a hard disk. Subsequently, the resulting records were subjected to computer analysis, whereby X-ray images recorded on the hard disk were recorded. Thereafter, signal values of 100 x 100 pixels in the central image portion were averaged and an initial luminescent value was obtained.

The sample of which light emission amount was confirmed was placed in a 35 °C and 85% hydrothermostat. After storage for the predetermined period, the light emission amount was determined, whereby luminance moisture resistance was evaluated. The initial light emission amount prior to storage in the hydrothermostat was set at 1.0 and the relative ratio of the light emission amount after storage in the hydrothermostat was listed in Table 1. When the resulting luminance is at most 0.8 compared to the initial, practical application was not possible.

**Table 1**

| Radiation Image Conversion Panel | Barier Film | Layer Configuration | Cushion Layer | | *1 | *2 | Water Vapor Permea bility g/m²·day atm | Degradation of Moisture Resistant Luminance (35 °C , 85%) | | | | Remarks |
|---|---|---|---|---|---|---|---|---|---|---|---|---|
| | | | Thickness µm | Transmittance % | | | | Initial | 50 days | 100 days | 300 days | |
| 1 | 1 | PET/barrier PET/acryl cushion layer/barrier PET/CPP | 10 | 95 | 100 | A | 0.02 | 1 | 1 | 0.95 | 0.92 | Inv. |
| 2 | 2 | PET/barrier PET/urethane cushion layer/barrier PET/CPP | 25 | 97 | 100 | A | 0.02 | 1 | 1 | 0.92 | 0.88 | Inv. |
| 3 | 3 | PET/barrier PET/acryl cushion layer/barrier PET/CPP | 10 | 92 | 100 | A | 0.01 | 1 | 1 | 0.98 | 0.95 | Inv. |
| 4 | 4 | PET/barrier PET/barrier PET/CPP | - | - | 100 | C | 0.02 | 1 | 1 | 0.9 | 0.75 | Comp. |
| 5 | 4 | PET/barrier PET/barrier PET/CPP | - | - | 400 | B | 0.25 | 1 | 0.75 | 0.52 | 0.42 | Comp. |

| | | | | | | | | | | | | |
|---|---|---|---|---|---|---|---|---|---|---|---|---|
| *1: Pressure during Bag Preparation g/m², *2: Chest Wall Portion Image Inv.: Present Invention, Comp.: Comparative Example | | | | | | | | | | | | |

As can be seen from Table 1, radiation image conversion panels of the present invention were those having thereon a phosphor layer, prepared by a gas phase deposition method, which resulted in high image quality and exhibited a high moisture resistant function.

## Claims

1. A radiation image conversion panel comprising:
(a) a quadrilateral phosphor plate comprising a substrate having thereon a phosphor layer; and
(b) a barrier film which envelops the phosphor plate by being folded back so that the barrier film faces itself and forms an envelop which is folded on one side and sealed on the other three sides,
wherein the barrier film comprises two cover sheets and a cushion layer sandwiched between the cover sheets.

2. The radiation image conversion panel of claim 1,
wherein each of the two cover sheets of the barrier film is provided with a moisture barrier layer comprising a transparent metal oxide compound, and the barrier film exhibits a moisture permeability of equal to or less than 0.02 g/m²·day·atm measured at 40 °C and 90% RH using a method based on JIS K 7129-1992.

3. The radiation image conversion panel of claim 1,
wherein the cushion layer has a thickness of 3 to 30 µm and has a transmittance of 90 % or more for a light of 500 nm.

4. The radiation image conversion panel of claim 1,
wherein the phosphor layer is formed with a vapor deposition method.
